# EUROPEAN PATENT APPLICATION

(11) **EP 3 621 009 A1**
(43) Date of publication of application: **11.03.2020**
(21) Application number: 19196047.5
(22) Date of filing: 06.09.2019
(51) Int. Cl.: G06Q 10/08, G06Q 10/10, G06Q 50/28

(54) **CARGO TRANSFER**

(30) Priority: 06.09.2018 GB 201814547
(71) Applicant: Maritech Development Limited, London E1W 1BF (GB)
(72) Inventor: GAZIOTIS, Michail, London, E1W 1BF (GB); MOTTNER, Jessica, London, E1W 1BF (GB); WHITE, Richard, London, E1W 1BF (GB); PERPINYAL, Eliad, London, E1W 1BF (GB)
(74) Representative: Hamer, Thomas Daniel

(57) **Abstract**

A computer-implemented method for identifying a potential ship-to-ship "STS" cargo transfer, the method comprising determining a distance between a first vessel and a second vessel, determining if the distance is below a vessel distance threshold, if the distance is below the vessel distance threshold, determining a period of the distance being below the vessel distance threshold, determining if the period is above a time threshold, and, if the period is above the time threshold, identifying a potential STS cargo transfer.

## Description

### Field

The present disclosure relates to identifying movements of vessels. In particular, it relates to identifying when vessels may be involved in a cargo transfer.

### Background

In shipping, cargo transported on a ship is unloaded at a port where the port authority can log the arrival of the cargo, its type, quantity, origin etc. For example, the local port authority may identify that 400 tons of steel has arrived at Cape Town on ship IMO1234567 from Rio de Janeiro. Similarly, a ship could be loaded from the port and details of the cargo that is loaded onto the ship can be recorded. In this way, cargo can be properly tracked as it is moved from port to port, country to country, and so on. It is important to quickly and accurately record cargo transfers, for example for security reasons.

However, in some cases, a ship may be too large to enter a port where cargo is to be delivered or collected. In other cases, weather conditions may not be conducive to safe entry into port for a ship. In these instances, a ship-to-ship (STS) cargo transfer may occur. This is where one or more other vessels come from the port to the ship at a location outside the port, and load or unload the cargo, sometimes over several ship-to-port trips.

As these cargo transfers do not take place in a port, they can be missed by the relevant port authority and the details of the transfer may therefore go unrecorded. Even if they are not missed, many port authorities do not report transfers they do record. These issues can result in inaccurate cargo reports, incorrect identification of cargo on a particular ship and even lost cargo Furthermore, most reports that are produced are done so daily (for example, midnight to midnight), and so any transfers that cross the boundary between reports may not be correctly identified, and different port authorities publish reports in different formats.

A method for identifying STS cargo transfers is required that mitigates at least some of these issues.

### Summary

In accordance with an aspect of the disclosure there is provided a computer-implemented method for identifying a potential ship-to-ship "STS" cargo transfer, the method comprising determining a distance between a first vessel and a second vessel, determining if the distance is below a vessel distance threshold, if the distance is below the vessel distance threshold, determining a period of the distance being below the vessel distance threshold, determining if the period is above a time threshold, and, if the period is above the time threshold, identifying a potential STS cargo transfer.

Optionally, determining a distance between a first vessel and a second vessel comprises determining a position of the first vessel, determining a position of the second vessel, and determining the distance between the first vessel and the second vessel based on the determined positions.

Optionally, determining a position of the first vessel and/or the second vessel further comprises determining the speed of the respective vessel at the determined position, determining if the speed of the respective vessel is below a speed threshold, determining the distance between the first and second vessels only if the speed of the respective vessel is below the speed threshold, and not identifying a potential STS cargo transfer if the speed of the respective vessel is above the speed threshold.

Optionally, the method further comprises determining a period of each vessel being at its respective position and determining if there is an overlap between the period of the first vessel being at its respective position and the period of the second vessel being at its respective position. Optionally, determining if there is an overlap comprises determining if an earliest instance of the first vessel being at its respective position is before a latest instance of the second vessel being at its respective position, and determining if an earliest instance of the second vessel being at its respective position is before a latest instance of the first vessel being at its respective position. Optionally, the method further comprises determining the period of the distance between the first vessel and the second vessel being below the vessel distance threshold based on the overlap.

Optionally, determining a position of the first vessel and/or the second vessel comprises determining a plurality of positions of the respective vessel. Optionally, the method further comprises merging at least two consecutive positions of the plurality of positions if a difference between the latitude and/or longitude of the at least two consecutive positions is below a merging distance threshold. Optionally, the method further comprises merging at least two consecutive positions of the plurality of positions if they have the same latitude and/or longitude.

Optionally, determining a position of the first and/or second vessel comprises receiving position data from the respective vessel. Optionally, the method further comprises receiving position data from the respective vessel in at least one automatic identification system "AIS" message.

Optionally, the method further comprises determining if a position of the first and/or second vessel is within a port area, determining the distance between the first and second vessels only if the position of the first and/or second vessel is outside a port area, and not identifying a potential STS cargo transfer if the position of the first and/or second vessel is inside a port area.

Optionally, the method further comprises determining the types of cargo that each vessel can carry, determining if the vessels can carry a common type of cargo, determining the distance between the first and second vessels only if the vessels can carry a common type of cargo, and not identifying a potential STS cargo transfer if the vessels cannot carry a common type of cargo.

Optionally, the vessel distance threshold is a predefined distance. Optionally, the vessel distance threshold is determined based on the length overall "LOA" of the largest of the first vessel and the second vessel.

Optionally, the method further comprises determining if the identified potential STS cargo transfer is complete. Optionally, determining if the identified potential STS cargo transfer is complete comprises determining if the distance between the first vessel and the second vessel is currently below the vessel distance threshold.

Optionally, the method further comprises determining a start time and an end time of the period for which the distance has been below the vessel distance threshold. Optionally, determining the end time of the period for which the distance has been below the vessel distance threshold comprises determining a time at which the distance between the first and second vessels became greater than the vessel distance threshold.

Optionally, the method further comprises storing the identified potential STS cargo transfer in a database.

Optionally, the method further comprises verifying if the identified potential STS cargo transfer is an actual STS cargo transfer. Optionally, the method further comprises removing a stored potential STS cargo transfer from a database if it is verified as an actual STS cargo transfer.

Optionally, the first and the second vessels are water-borne vessels.

Optionally, the location of the potential STS cargo transfer may be stored as an anchorage.

Optionally, the method may comprise identifying a plurality of potential STS cargo transfers, storing the location of each potential STS cargo transfer as an anchorage; and responsive to receiving a request from a user for anchorage information, providing anchorage information to the user. The anchorage information may comprise, or may be in the form of a map or database of anchorages in a geographical region.

Also disclosed is a computer readable medium comprising computer-executable instructions which, when executed by a processor, cause the processor to perform the method of any of the preceding claims.

### Brief Description of the Drawings

Exemplary embodiments of the disclosure shall now be described with reference to the drawings, in which:
Figure 1 is a schematic diagram of an example port area;
Figure 2 is a schematic diagram of a STS cargo transfer;
Figure 3 is a flow diagram of a method for identifying a potential STS cargo transfer according to the disclosure;
Figure 4 is a flow diagram of a method for identifying instances where vessels are moving;
Figure 5 is a flow diagram of a method for identifying instances where vessels are outside of a port area;
Figure 6 is a flow diagram of a method for determining whether two vessels are of compatible types;
Figure 7 is a flow diagram of a method for determining a period for which two vessels are within a threshold distance; and
Figure 8 is a block diagram of a computing device for performing the disclosed methods.

Throughout the description and the drawings, like reference numerals refer to like parts.

### Specific Description

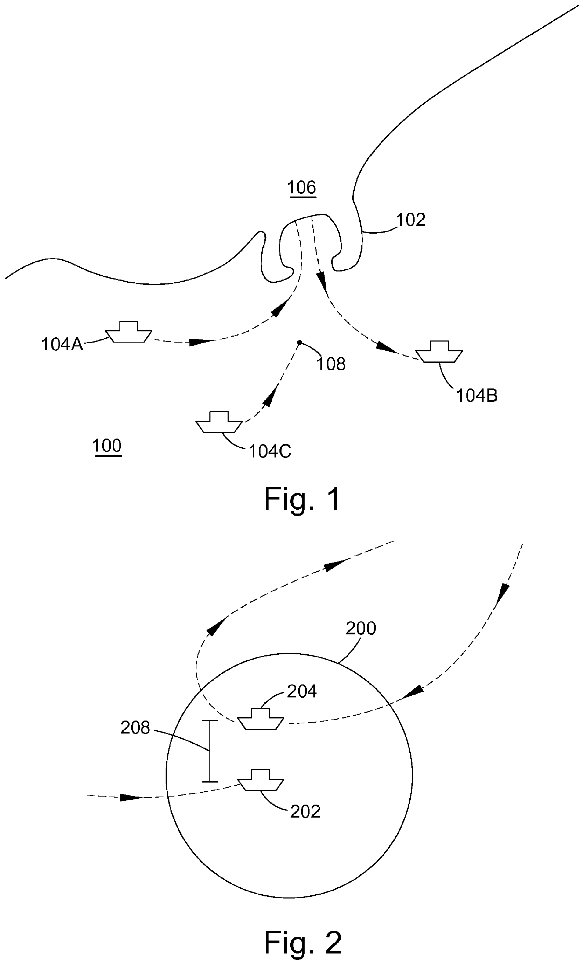

Figure 1 is a schematic diagram of an example port area 100. The port area 100 includes a port 102. Vessels 104A-C travel in and out of the port 102 to unload cargo onto a dock 106. Alternatively or additionally, the vessels 104A-C may be loaded with cargo from the dock 106. In this example, the first vessel 104A travels into the port 102 with cargo from another location, and the second vessel 104B travels out of the port 102 with cargo destined for another location. However, the third vessel 104C is too large to enter the port 102, and therefore cannot access the dock 106 to deliver its cargo. Instead, the third vessel stops at a position 108 outside the dock.

In order to deliver the cargo from the third vessel 104C to the dock 106, a STS cargo transfer is initiated. One or more vessels travels from the port 102 to the position 108 of the third vessel 104C to receive the vessel's cargo and transport it to the dock 106. This is shown in more detail in the schematic diagram of Figure 2.

As shown in Figure 2, a first vessel 202 is stopped in an area 200. The first vessel 202 corresponds to the third vessel 104C and the area 200 may roughly correspond to the position 108 shown in Figure 1. As the first vessel 202 is too large to enter a nearby port, such as port 102, a second vessel 204 travels from the port 102 to the area 200. The second vessel 204 pulls alongside the first vessel 202 at a distance 208. The distance 208 must be sufficiently small that cargo held on the first vessel 202 can be safely and efficiently transferred to the second vessel 204. Once the cargo transfer is complete or the second vessel 204 is fully laden, the second vessel 204 travels back to the port 102 to unload the cargo onto the dock 106.

In this example, only a single second vessel 204 is shown, but it will be appreciated that any number of vessels could be employed to effect the cargo transfer in the most efficient manner. Similarly, whilst only a single trip is shown for the second vessel 204 to collect all the cargo, it will be appreciated that any number of trips could occur to effect the cargo transfer in the most efficient manner.

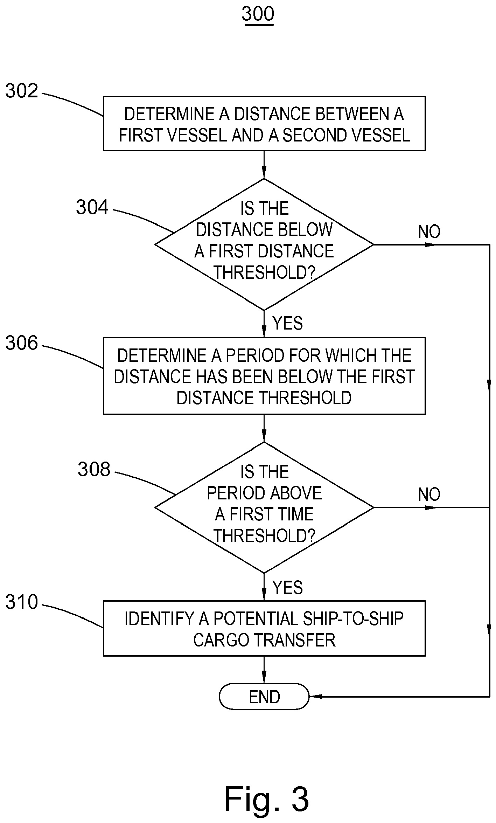

As these STS cargo transfers occur outside of a port, they can be missed by the port authority and therefore the cargo transfer may be incorrectly recorded, or not recorded at all. A method is therefore required for identifying when vessels may have taken part in, or may be currently taking part in, a STS cargo transfer. Figure 3 shows a method 300 for identifying a potential STS cargo transfer.

At step 302, a distance 208 between a first vessel and a second vessel at a given time is determined. The first vessel may be the first vessel 202, and the second vessel may be the second vessel 204, as described in relation to Figure 2. In some embodiments, the positions of first vessel 202 and the second vessel 204 are determined, and this information is used to determine the distance 208 between the vessels. This will be explained in more detail below. The distance 208 may be calculated based on the Haversine formula known in the art. In other embodiments, one vessel may determine the distance 208 to the other, for example using tools available to a ship's captain that are known in the art, such as radar. This could be achieved using known time-of-flight or frequency modulation distance measurement techniques. The time for which the distance 208 is determined may be a current time, if the method is performed in real time, or may be previous time if a post-processing approach is being used.

Once the distance 208 between the vessels at a given time has been determined, the distance 208 is compared to a vessel distance threshold at step 304. The use of the vessel distance threshold allows the determination of whether the vessels are close enough to be engaged in a STS cargo transfer. If the distance 208 is below the vessel distance threshold, the vessels could be or could have been engaged in a STS cargo transfer. If the distance 208 is above the vessel distance threshold, the vessels are considered too far apart to be engaged in a STS cargo transfer. Step 304 may be done in real time, whilst the vessels are alongside each other, or in a post-processing step using information regarding a previous instance at which the two vessels were alongside each other. The vessel distance threshold may be expressed in any suitable distance measurement dimensions, for example in metres or miles.

The vessel distance threshold may be a predefined distance considered small enough to allow a STS cargo transfer to take place. This may depend on numerous factors, for example the type and size of the vessels involved in the transfer, the type of cargo being transferred and any other apparatus required to effect a safe and efficient cargo transfer. In a preferred embodiment, the length overall "LOA" of one or both of the vessels in the transfer is used as the vessel distance threshold, as will be discussed below. If this methodology fails, for example when one, or both, of the vessels are of unknown length, a default vessel distance threshold may be used. The default vessel distance threshold may be 300m.

If the distance between the vessels is determined to be below the vessel distance threshold, a period of the distance being below the vessel distance threshold is determined at step 306. This will be referred to as the "alongside period". This can be achieved, for example, by determining a first and last time at which the vessels were within the threshold vessel distance discussed above. Similarly to the distance determination, step 306 could be done in real time, whilst the vessels are alongside each other, or in a post-processing step using information regarding a previous instance at which the two vessels were alongside each other. If a real time approach is used, the vessels may still be within the threshold vessel distance at a time after the first time. In this instance, a period between the first time they were within the threshold vessel distance and the current time can be calculated to give a current, ongoing alongside period. If one vessel has moved such that the vessels are no longer within the threshold vessel distance, the last time at which they were within the threshold vessel distance can be determined and used with the first time to calculate a period for which they were within the threshold vessel distance.

Once the alongside period for the first vessel 202 and the second vessel 204 has been determined, it is compared to a time threshold at step 308. The time threshold is a period considered long enough to allow a STS cargo transfer to take place. In embodiments, the vessels must have been alongside each other for at least the duration of this period to be considered as engaged in a STS cargo transfer. If the alongside period is above the time threshold, the vessels could be, or could have been, engaged in a STS cargo transfer. If the alongside period is below the time threshold, the vessels are not considered to have been alongside each other for long enough to be engaged in a STS cargo transfer. In real time approach, if the current, ongoing alongside period is below the time threshold, it may be desired to wait for more information to become available to determine if the vessels remain alongside each other for long enough to reach the time threshold. The time threshold may be expressed in any suitable time measurement dimensions, for example in minutes or hours. A typical time threshold may be 6 hours.

The time threshold may vary dependent on numerous factors, for example the type and size of the vessels involved in the transfer and the type of cargo being transferred. The time threshold may be configured based on empirical knowledge of the industry.

If the alongside period for the first vessel 202 and the second vessel 204 is determined to be above the time threshold, a potential STS cargo transfer is identified at step 310. This is because the first vessel 202 and the second vessel 204 are determined to be, or to have been, close enough to each other for a long enough period that a STS cargo transfer could have occurred.

The method can be performed by a computing device, as discussed below. Details of the potential transfer, for example vessel identifiers, locations and a time at which the potential transfer occurred, can be stored, for example in a database. This allows a list of identified potential STS cargo transfers to be analysed, as will be discussed below.

A method is therefore provided that can identify potential cargo transfers that do not occur at a dock, such as dock 106. This ensures that cargo transfers that are not readily identified by existing port authority methods and systems can be identified, and the relevant details recorded and reported accordingly. Furthermore, the method 300 can be performed independently of existing reporting techniques. Data needed to perform the method 300 can be retrieved at any time, as will be discussed below, and so any potential transfers that span a report boundary (for example, at midnight) can still be identified. Details of the potential transfer can be stored in any relevant format that allows universal understanding, reporting and analysis of the identified potential STS cargo transfers. The reports may be in a configurable format to suit a particular presentational purpose and the raw data may be stored in an easily understandable format known in the art.

Further steps can be performed that may increase the accuracy of the method 300. As discussed above, the positions of first vessel 202 and the second vessel 204 can be determined in order to determine the distance 208 between the vessels. The determination of the position of each vessel can be achieved in a number of ways. In a preferred embodiment, this is achieved using the automatic identification system (AIS) known in the art. In the AIS, each vessel above a certain gross tonnage is required to be fitted with a tracking system, which broadcasts information relating to the identity and characteristics of the vessel, as well as data relating to its current location and movement. Such data may include the location, orientation, course, and speed of the vessel. Further information that may be included is the vessel's International Maritime Organization (IMO) number, the maritime mobile service identity (MMSI), navigation status (e.g. at anchor, under way using engine, etc.), rate of turn (e.g. right or left, 0 to 720 degrees per minute), speed over ground (typically given in knots), location data (e.g. longitude and latitude), position accuracy, course over ground (relative to true north), true heading, data relating to fuel usage (e.g. current amount of fuel, current fuel usage rate), and a time stamp. Each AIS message contains the location and time at which it was broadcast. Typically, AIS messages are automatically broadcast at regular time intervals via a transmitter on the vessel. The time interval is typically of the order of a few seconds. In embodiments using the AIS, the first and second vessels 202, 204 are each equipped with an AIS transceiver that broadcasts the vessel information. The information signals are received by AIS transceivers fitted on other vessels or on land based systems. In this way, the position of the first and/or second vessel 202, 204 can be determined repeatedly over a period, to give a track of the vessel's position over that time. The AIS captures all ship movement and data needed to perform the method 300 can be retrieved at any time.

In other embodiments, the positions may be determined using the Global Positioning System (GPS) or other known geolocation techniques such as GLONASS, Galileo and/or BeiDou.

As discussed above, in preferred embodiments, the LOA of one or both of the vessels in the transfer is used as the vessel distance threshold. The LOA of a vessel is the maximum length of a vessel's hull. This information may be stored in a database for each vessel using the system. Additionally or alternatively, The reported GPS position, and the location of the GPS device relative to the sides of the vessel can be used. For example, the distance from the GPS device to the bow and the distance from the GPS device to the stern can be used to determine the vessel's length and, using the reported GPS position, it's true position in the sea. In the instance that the positions of the vessels are determined from AIS messages, the reported positions will be those of the AIS transceivers on each vessel. These transceivers are typically located on the bridge of a vessel (towards the bow). Vessels may be engaged in a STS cargo transfer where they are alongside each other "back to front". For example, the port side of the first vessel 202 may be alongside the port side of the second vessel 204. Similarly, the starboard side of the first vessel 202 may be alongside the starboard side of the second vessel 204. In this instance, the AIS transceivers of the respective vessels would be a considerable distance from each other and, as such, the determined positions of each vessel may seem a large distance apart. However, in this instance, the difference between the positions would not be larger than the LOA of the largest of the first and second vessels 202, 204. Therefore, using the LOA of the largest of the first and second vessels 202, 204 as a threshold for the distance 208 between the vessels allows such adjacent positioning to be detected.

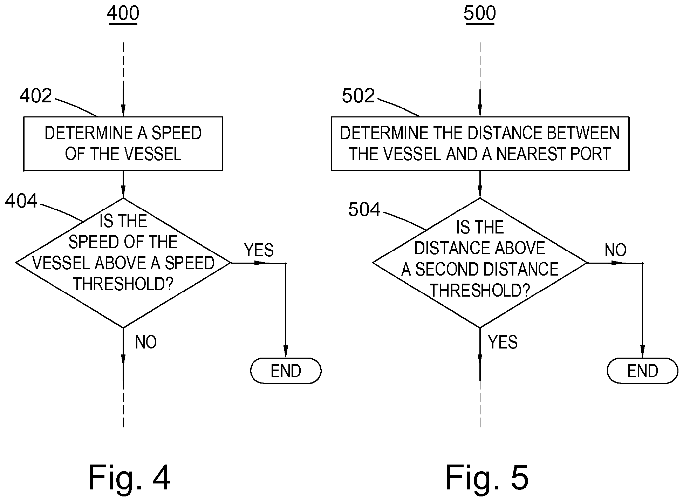

To further refine the number of potential STS cargo transfers that are identified, further criteria can be added to method 300. Figures 4, 5 and 6 show additional steps that could be integrated with the method 300 to refine the number of potential transfers that are identified. It will be appreciated that these additional steps of figures 4, 5 and 6 could be added to the method alone, or in combination.

Whilst it is possible that STS cargo transfers can occur with both vessels moving, it is more likely that the vessels will be stationary to increase the ease and safety of the transfer. Therefore, it may be desired to discount any instances where one or both of the vessels 202, 204 are moving. Figure 4 shows a method 400 for achieving this. The method 400 could be implemented at any time before step 310 of the method 300.

At step 402, the speed of the first and/or second vessel is determined. This can be determined in many ways, for example using the speed over ground information that is transmitted in AIS messages. At step 404, the determined speed is compared to a speed threshold. The speed threshold is a speed below which a vessel can be considered to be stationary (it will be appreciated that due to tidal movements and currents, a vessel that is not intending to move can change position on the water). The speed threshold can be expressed in any suitable speed measurement dimensions, for example in knots. Atypical speed threshold is 0.2 knots. the speed of the vessel is above the speed threshold, the vessel is considered to be moving and therefore not in a STS cargo transfer. If the speed of the vessel is below the speed threshold, the vessel is considered to be stopped. If the distance and time criteria in method 300 have also been met, then a potential STS cargo transfer is identified. In a preferred embodiment, the method 400 is performed before the distance 208 between the first vessel 202 and the second vessel 204 is determined at step 302. In this way, any instances where one or more of the vessels is moving can be discounted before any distance or time data is processed.

Using the method 400, a potential STS cargo transfer is only identified if the vessels are stationary and have been close enough to each other for a long enough time for a STS cargo transfer to have occurred.

Whilst it is possible that STS cargo transfers can occur within a port area, it is more likely that once a vessel is in a port, such as port 102, any loading or unloading of cargo would be done at the dock 106. Therefore, it may be desired to discount any instances where the vessels 202, 204 are inside a port area. Figure 5 shows a method 500 for achieving this. Similarly to the method 400, the method 500 could be implemented at any time before step 310 of the method 300.

At step 502, the distance between the first and/or second vessel and a nearest port is determined, for example the port 102 discussed in relation to Figure 1. This can be determined in many ways, for example using the positions of the vessel (determined in any of the ways discussed above), by radar, or by other known distance determination means. At step 504, the distance is compared to a port distance threshold. The port distance threshold is a distance from a port below which a vessel can be considered to be in the port. The port distance threshold can be expressed in any suitable distance measurement dimensions, for example in kilometres and may be aligned to port boundaries. If the distance is below the port distance threshold, the vessel is considered to be inside a port and therefore not in a STS cargo transfer. If the distance is above the port distance threshold, the vessel is considered to be outside of a port area. If the distance and time criteria in method 300 have also been met, then a potential STS cargo transfer is identified. In a preferred embodiment, the method 500 is performed before the distance 208 between the first vessel 202 and the second vessel 204 is determined at step 302. In this way, any instances where one or more of the vessels is in a port 102 can be discounted before any distance or time data is processed.

In other embodiments, and in combination with the method 400, a global zone system can be used as known in the art. Such a system divides the globe into a number of geographical zones, each having a particular ID. This may be a numerical ID. There are various zonal systems of convenience depending on the ship types or the commodity. A. zone ID can be determined for the stopped position of the vessels. It can then be determined if the zone ID matches any known zone IDs inside the a port. If so, the nearest port can be determined by comparing the distance between port definition and vessel point).

Using the method 500, a potential STS cargo transfer is only identified if the vessels are outside a port area and have been close enough to each other for a long enough time for a STS cargo transfer to have occurred.

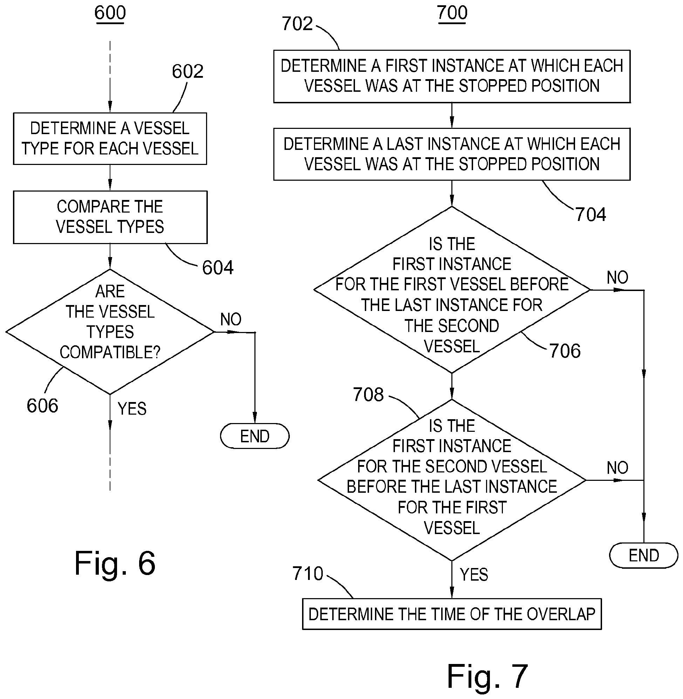

Certain vessels are designed to carry certain types of cargo. Whilst some vessels can carry multiple types of cargo, many vessels are only able to handle a particular cargo type. For example, one vessel may only be equipped to carry steel, whereas another may only be equipped to carry chemical materials. To perform a STS cargo transfer, it is required that both vessels involved can carry the type of cargo being transferred. Therefore, it may be desired to discount any instances where the vessels 202, 204 are not able to carry the same type of cargo. Figure 6 shows a method 600 for achieving this. Similarly to the methods 400 and 500, the method 600 could be implemented at any time before step 310 of the method 300.

At step 602, a vessel type for each of the first and second vessels 202, 204 is determined. This can be determined in many ways, for example from data transmitted in AIS messages. At step 604, the vessel types are compared to each other. At step 606, it is determined if there is a match between the vessel types, i.e., if the vessels can carry a common cargo type. If there is no match, the vessels 202, 204 are considered incompatible and therefore not in a STS cargo transfer. If there is a match, the vessels 202, 204 are considered compatible. If the distance and time criteria in method 300 have also been met, then a potential STS cargo transfer is identified. In a preferred embodiment, the method 600 is performed before the distance 208 between the first vessel 202 and the second vessel 204 is determined. In this way, any instances where the vessels are not compatible can be discounted before any distance or time data is processed.

Using the method 600, a potential STS cargo transfer is only identified if the vessels are compatible and have been close enough to each other for a long enough time for a STS cargo transfer to have occurred.

Any combination of the methods 400, 500 and 600 could be implemented with the method 300. When the methods 300, 400, 500 and 600 are combined, potential STS cargo transfers are only identified if the vessels are of compatible types, are stationary, are outside a port area and have been close enough to each other for a long enough time for a STS cargo transfer to have occurred. This significantly refines the number of potential transfers that are identified and, as such, reduces the amount of processing of potential transfers and the amount of memory required to store the identified potential transfers. As discussed above, these methods could be performed in real time, while the vessels are in a potential STS cargo transfer, or can be performed as a post-processing step once all the necessary data has been received.

In instances that it is determined that a vessel is not moving, as described in relation to method 400, further improvements to the method can be realised. For example, in a stopped position, there is no need to use all position messages that are issued by that vessel whilst it is in that position. As discussed above, a vessel may broadcast AIS messages every few seconds, and a STS cargo transfer can take a number of hours. Therefore, hundreds or even thousands of AIS messages could be issued while the vessel is at substantially the same location.

To reduce the amount of position data that is processed, consecutive position messages from a single vessel having the same latitude and/or longitude can be merged into a single data point. In this case, a time range could be applied to the stop position, spanning from the time of the first message to the time of the last message. Consecutive positions at low but non-zero speeds could also be merged. In this case, distance checks may be used to make sure the vessel has not crept too far, as discussed below.

To further reduce the amount of data to be processed, consecutive position messages from a single vessel having a similar, but not necessarily the same, latitude and/or longitude can also be merged. To achieve this, a first merging distance threshold can be used and applied to consecutive position messages. If the distance between the positions indicated by the consecutive messages is below the first merging distance threshold, the positions can be merged.

To ensure that the position does not "creep" too far from a position indicated in a first message, by virtue of accumulating small position changes over a number of consecutive messages, each position can be compared to that in the first received message under consideration. To achieve this, the distance between the first position and the latest position is processed, as well as the distance between consecutive positions. This allows a STS cargo transfer where the vessels keep moving slowly to be identified, and a stopped position of a vessel to be distinguished from a nearly stopped position. If the difference between the position of the first received message and the latest received message is above a second merging distance threshold, a merge may not be allowed and a new position is indicated based on the latest received position. The first merging distance threshold and the second merging distance threshold may be the same or different. A typical maximum value of these thresholds is 300m.

An example of this approach is discussed below in relation to Table 1. A position of a vessel is determined over a period of 10 hours, during which it is identified that the vessel has been in six distinct positions (p₁ to p₆). Each position differs from the previous position by a small amount in either latitude and/or longitude. The vessel has been at each position for varying amounts of time, as indicated by the first received and last received times for each position.

**Table 1**

| | **First Received** | **Last Received** | **Latitude** | **Longitude** | **Stopped** |
|---|---|---|---|---|---|
| **p₁** | 10:10 | 11:20 | 12.0005 | 45.4575 | Yes |
| **p₂** | 12:40 | 12:40 | 12.0006 | 45.0006 | Yes |
| **p₃** | 13:50 | 14:50 | 12.0007 | 45.4505 | Yes |
| **p₄** | 14:50 | 15:20 | 12.0008 | 45.0056 | Yes |
| **p₅** | 16:50 | 16:50 | 12.0008 | 45.0056 | No |
| **p₆** | 19:10 | 20:10 | 12.0008 | 45.0056 | Yes |

In this case, the first and second merging distance thresholds discussed above are set at the same value. The difference between positions p₁ and p₂ is below the first merging distance threshold, and so p₁ and p₂ can be merged. The difference between positions p₂ and p₃ is also below the first merging distance threshold, and the difference between positions p₁ and p₃ is below the second merging distance threshold. Therefore, p₃ can be merged with p₁ and p₂.

The difference between positions p₃ and p₄ is below the first merging distance threshold, but the difference between positions p₁ and p₄ is above the second merging distance threshold. Therefore, p₄ is not merged with p₁ to p₃. Instead, p₄ is merged with p₃ and p₃ is removed from the p₁ - p₃ merge and put in the new merge. This results in a p₁ - p₂ merge and a p₃ - p₄ merge. Alternatively, p₁ to p₃ could remain merged and p₄ would be left as an individual position.

The distance between positions p₃, p₄, p₅, and p₆ are each below the first and second merging distance thresholds. However, p₅ has not been identified as a stopped position. Therefore, there will have been unrecorded positions between p₅ and p₆ as the speed of the vessel greater than the maximum allowed to be seen as the same stop, as discussed in relation to Figure 4. Therefore, p₆ is considered a separate position from p₃, p₄ and p₅, which are merged.

Therefore, three merged positions are determined rather than six. Each merged position includes the range from the first to the last position. Each merged position is stored, and can be refreshed when a next position is received.

When the vessels are determined to be in a stopped position, as described in relation to Figure 4, it is also possible to more accurately determine the alongside period. A method 700 for determining the alongside period is shown in Figure 7. At step 702, a first instance at which each vessel is at the stopped position is determined. At step 704, a last instance at which each vessel is at the stopped position is determined. In the case that one or both vessels are still at the stopped position, the last instance would be the latest instance for which position data is available. At step 706, it is determined if the first instance at which the first vessel is at the stopped position is before a last instance at which the second vessel is at the stopped position. At step 708, it is determined if the first instance at which the second vessel is at the stopped position is before the last instance at which the first vessel is at the stopped position. If both of these conditions are met, then there is an overlap between the times at which the vessels were at the stopped position. In this case, the period of the overlap is determined at step 710. This can then be used as the alongside period, at step 306 of the method 300. The method 700 provides an accurate determination of the period for which the vessels have been alongside each other. The later of the first instances at which each vessel is at the stopped position can be considered as the start time for a potential STS cargo transfer.

As discussed above, the disclosed methods can be performed in real time, while the vessels are in a potential STS cargo transfer, or can be performed as a post-processing step once all the necessary data has been received. In the first case, it may be of interest to determine whether the potential STS cargo transfer is still ongoing or has been completed. In the second case, it may be of interest to determine the actual length of time of the potential STS cargo transfer, beyond an indication that that time is above the time threshold discussed above.

As discussed above in relation to Figure 3, the criteria to identify a potential STS cargo transfer are that the vessels are within a threshold distance for at least a threshold period. This could be open ended, as the vessels could stay alongside each other once the time threshold has been met. It may be desirable to determine when the potential STS cargo transfer has ended. Once a potential STS cargo transfer has been identified, it can be determined that the potential transfer has ended as soon as the distance criterion is no longer met. In a real-time implementation, this can be done using the regular updates of vessel position and, as soon as the distance between the vessels increases beyond the vessel distance threshold, the potential STS cargo transfer can be closed. In a post-processing implementation, the position data can be analysed to identify a first time at which the distance between the vessels increased beyond the vessel distance threshold after a potential transfer was identified. The time at which the distance increased beyond the vessel distance threshold can be considered as the end time for the potential transfer.

This allows the system to identify two types of potential STS cargo transfers: ongoing potential transfers and completed potential transfers. These can each be stored, for example in a database, as discussed above. A stored potential transfer can then be verified to determine whether it relates to an actual STS cargo transfer. This can be done in a number of ways. For example, it can be determined if there was a port call around same time and place. If so, it is likely that any cargo transfer took place at a dock, such as dock 106, and not in a STS cargo transfer. In another example, the draft of a vessel (the vertical distance between the waterline and the bottom of the vessel's hull) can be used to determine if weight has been added or removed to the vessel during the potential transfer, indicated a loading or unloading of cargo. This allows potential STS cargo transfers to be confirmed as actual transfers, and reported accordingly. The verified transfers can then be removed from the list of potential STS cargo transfers, and/or passed on for further analysis, so that the database can be maintained with a minimum of storage.

In addition, methods of the present disclosure can be used to identify anchorages. An anchorage can be described as an area, region or location off the coast which is suitable for a vessel / ship to anchor. An anchorage may be located within or outside a recognised port. As such an anchorage is an open water surface where traffic may be at least somewhat controlled by nearby port officials. A STS cargo transfer typically takes place at an anchorage. Selecting an anchorage may be quite difficult for the person in charge of navigating the vessel. A good anchorage is protected from wind and swell, and is sufficiently out of the way of typical vessel traffic routes so as not to get in the way of such traffic. The seafloor must also be suitable in the region of the anchorage. For example, regions with foul ground will not be suitable. The seafloor must be free from obstructions such as hard rocks, coral, wreckage, or other impedents to securing or unsecuring an anchor. The suitability of a potential anchorage may also change with the weather and other environmental conditions, such as the wind direction.

In some implementations, the location of the identified STS cargo transfer is recorded as an anchorage. This location might be large enough in its size to encompass both the first and second vessel's locations at the time of the STS transfer. In other implementations, the respective positions of each of the first and second vessel during the identified STS transfer may be recorded as two separate anchorages.

The present method can be used to identify anchorages, to save the anchorage locations, and thus create a database or map of suitable anchorages which may be used for the purpose of assisting a vessel choose a suitable place to anchor, for example for the purpose of conducting a STS cargo transfer. In an example implementation, it is determined that a distance between a first vessel and a second vessel is below a vessel distance threshold and that a period of the distance being below the vessel distance threshold is above a time threshold. A potential STS cargo transfer is thus identified. Responsive to the identification of a potential STS cargo transfer, the location of the transfer is recorded as an anchorage. It may be additionally recorded that the anchorage is suitable for a STS transfer. The AIS data of the first and second vessel may be used to tag the anchorage location with vessel information such as the vessel size, weight, type, etc. In one example implementation, before an anchorage is added to the database and/or map, the number of potential STS cargo transfers identified at the associated location must be greater than a threshold. Thus, only well-defined and sufficiently well-used anchorages may be added to the database and/or map, which means that the navigator of a vessel can have a greater degree of certainty that the off-coast area identified as an anchorage in the database or on the map is indeed a suitable anchorage.

By identifying and recording a plurality of such anchorages, a database and/or a map of potential anchorages can be built up. A user, such as a ship's captain or other person in charge of navigating the vessel, may request access to the database or map for the purpose of deciding where to anchor their vessel. By providing a map and/or database of anchorages, i.e. locations at which it is suitable to anchor, which is based only on recently identified STS transfers, it is possible to provide the user with information which is immediately relevant and up to date. For example, by basing the anchorage information on recently identified STS transfers, the anchorage database and/or map better takes into account changes to the suitability of potential anchorages which take place over time, for example changes in the suitability of the seafloor. Using 'recent' data may involve using data on a suitable timescale or time threshold which will depend on the requirements of the particular implementation. For example, the map may be comprised of anchorages identified within the last year, within the last 6 months, within the last 3 months, or within the last 2 weeks. A suitable timescale or time threshold is used depending on he requirements of the implementation.

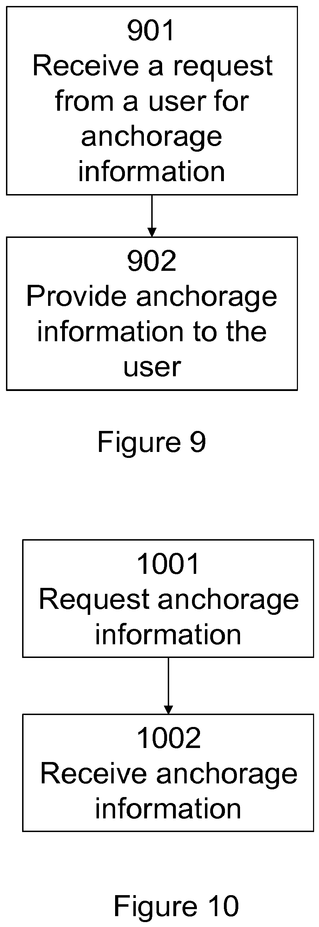

Figures 9 and 10 depict flowcharts according to a disclosed method. Figure 10 depicts method steps to be carried out by a processor which requests anchorage information, and figure 9 depicts method steps to be carried out by a processor which provides anchorage information. It will be appreciated that while these methods are separate and carried out by different entities or processors, they can also be considered a single method. At step 1001, a user requests anchorage information. The user request is sent from a processor which, for example, may be on board a particular vessel, or else which is associated with the navigation of a particular vessel. Optionally, the request may comprise vessel information such as the vessel type, weight, cargo, etc. The vessel information may be provided in the form of an AIS message, or else may be derived from a received AIS message. The request may optionally comprise geographical information, e.g. information which allows a geographical region to be identified. This geographical information may identify a port, or may be in the form of a pre-planned vessel route which comprises and location or port at which the navigator of the vessel may wish to anchor.

At step 901, the request for anchorage information from the user is received. The request may be received at a processor such as a server which is be located at a remote location, for example in London. Responsive to receiving the request, the processor provides, at step 902, anchorage information to the user. The anchorage information may be in the form of a map and/or a database of potential anchorages. As described above, the anchorage information is based on the locations associated with STS transfers identified using the presently disclosed method. The anchorage information comprises the location of a plurality of anchorages, each anchorage location having been identified based on the location of one or more identified STS cargo transfers. Optionally, the anchorage information provided at step 902 comprises the location of suitable anchorages in the identified geographical region. Optionally, the map or database is generated, responsive to receiving the request, based on the geographical information and/or the vessel information, such that the user is shown the location of anchorages at the geographical region which are suitable for their vessel. In such implementations, an anchorage database and/or map may be provided to a user based on information regarding the particular vessel.

At step 1002, the anchorage information is received by the processor which made the request at 1001. Optionally, the anchorage information such as a map or database may be outputted in one or more ways, for example displayed on a screen.

An example interaction between two processors will now be given, with reference to figures 9 and 10. The captain of a large cargo ship is navigating a cargo ship toward Liverpool, and wishes to undertake a STS cargo transfer outside Liverpool Dock. The captain requests, 1001, via the on-board computer, a map of suitable anchorages for a large cargo vessel in the vicinity of Liverpool Dock. This request is received, 901, at a central server in London, which queries a database of all identified anchorages based on the geographical information (Liverpool Dock) and vessel information (large cargo ship). The query causes a map to be generated of all anchorages which have been identified within 10 miles of Liverpool Dock. Each anchorage on the map is associated with a location at which at least one STS cargo transfer has been identified between one or more large cargo ships. The central server provides, 902, the map to the captain's on-board computer, which is then received, 1002, at the on-board computer. This allows the ship's captain to identify and navigate to a suitable anchorage to conduct his STS cargo transfer.

To date, it has not been possible to produce any information regarding anchorages which is not based on information voluntarily provided by vessels and port authorities. Unfortunately, this information may not be correct or complete. For example, a port authority may provide information regarding suitable places to anchor within the port, but not regarding suitable locations outside of the port. Voluntarily provided information may also not be provided on a regular basis. The present method may be used to provide anchorage information which is not only automatically generated but also automatically updated. The anchorage information is based on the identification of STS transfers, which may in turn be identified based on AIS messages which a vessel must transmit at regular intervals by law. The present methods therefore allow for the provision of more accurate and reliable information regarding anchorages.

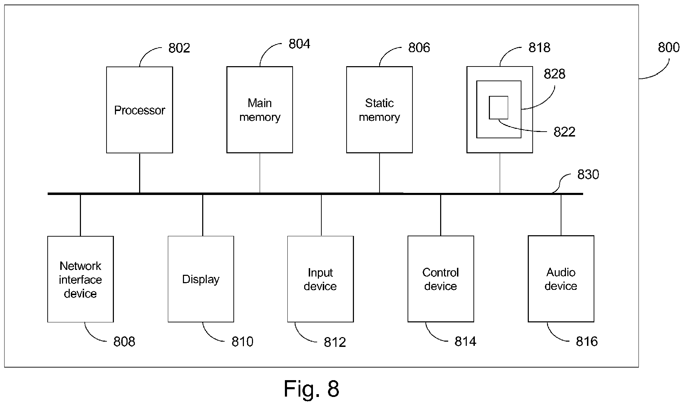

The methods discussed above can be performed on a computing device located, for example, on a vessel or on land. Figure 8 illustrates a block diagram of one implementation of a computing device 800 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 800 includes a processing device 802, a main memory 804 (e.g., read-only memory (ROM), flash memory, dynamic random access memory (DRAM) such as synchronous DRAM (SDRAM) or Rambus DRAM (RDRAM), etc.), a static memory 806 (e.g., flash memory, static random access memory (SRAM), etc.), and a secondary memory (e.g., a data storage device 818), which communicate with each other via a bus 830.

Processing device 802 represents one or more general-purpose processors such as a microprocessor, central processing unit, or the like. More particularly, the processing device 802 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 802 may also be one or more special-purpose processing devices such as an application specific integrated circuit (ASIC), a field programmable gate array (FPGA), a digital signal processor (DSP), network processor, or the like. Processing device 802 is configured to execute the processing logic (instructions 822) for performing the operations and steps discussed herein.

The computing device 800 may further include a network interface device 808. The computing device 800 also may include a video display unit 810 (e.g., a liquid crystal display (LCD) or a cathode ray tube (CRT)), an alphanumeric input device 812 (e.g., a keyboard or touchscreen), a cursor control device 814 (e.g., a mouse or touchscreen), and an audio device 816 (e.g., a speaker).

The data storage device 818 may include one or more machine-readable storage media (or more specifically one or more non-transitory computer-readable storage media) 828 on which is stored one or more sets of instructions 822 embodying any one or more of the methodologies or functions described herein. The instructions 822 may also reside, completely or at least partially, within the main memory 804 and/or within the processing device 802 during execution thereof by the computer system 800, the main memory 804 and the processing device 802 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing ", "enabling", "maintaining," "identifying," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method for identifying a potential ship-to-ship "STS" cargo transfer, the method comprising:
determining a distance between a first vessel and a second vessel;
determining if the distance is below a vessel distance threshold;
if the distance is below the vessel distance threshold, determining a period of the distance being below the vessel distance threshold;
determining if the period is above a time threshold; and
if the period is above the time threshold, identifying a potential STS cargo transfer.

2. The computer-implemented method of claim 1, wherein determining a distance between a first vessel and a second vessel comprises:
determining a position of the first vessel;
determining a position of the second vessel; and
determining the distance between the first vessel and the second vessel based on the determined positions.

3. The computer-implemented method of claim 2, wherein determining a position of the first vessel and/or the second vessel further comprises:
determining the speed of the respective vessel at the determined position;
determining if the speed of the respective vessel is below a speed threshold;
determining the distance between the first and second vessels only if the speed of the respective vessel is below the speed threshold; and
not identifying a potential STS cargo transfer if the speed of the respective vessel is above the speed threshold.

4. The computer-implemented method of claim 3, further comprising:
determining a period of each vessel being at its respective position; and
determining if there is an overlap between the period of the first vessel being at its respective position and the period of the second vessel being at its respective position.

5. The computer-implemented method of claim 4, wherein determining if there is an overlap comprises:
determining if an earliest instance of the first vessel being at its respective position is before a latest instance of the second vessel being at its respective position; and
determining if an earliest instance of the second vessel being at its respective position is before a latest instance of the first vessel being at its respective position.

6. The computer-implemented method of claim 4 or 5, further comprising determining the period of the distance between the first vessel and the second vessel being below the vessel distance threshold based on the overlap.

7. The computer-implemented method of any of claims 2 to 6, wherein determining a position of the first vessel and/or the second vessel comprises determining a plurality of positions of the respective vessel.

8. The computer-implemented method of claim 7, further comprising merging at least two consecutive positions of the plurality of positions if a difference between the latitude and/or longitude of the at least two consecutive positions is below a merging distance threshold.

9. The computer-implemented method of claim 8, further comprising merging at least two consecutive positions of the plurality of positions if they have the same latitude and/or longitude.

10. The computer-implemented method of any of claims 2 to 9, wherein
determining a position of the first and/or second vessel comprises receiving position data from the respective vessel; and
receiving position data from the respective vessel in at least one automatic identification system "AIS" message.

11. The computer-implemented method of any preceding claim, further comprising:
determining if a position of the first and/or second vessel is within a port area;
determining the distance between the first and second vessels only if the position of the first and/or second vessel is outside a port area; and
not identifying a potential STS cargo transfer if the position of the first and/or second vessel is inside a port area.

12. The computer-implemented method of any preceding claim, further comprising:
determining the types of cargo that each vessel can carry;
determining if the vessels can carry a common type of cargo;
determining the distance between the first and second vessels only if the vessels can carry a common type of cargo; and
not identifying a potential STS cargo transfer if the vessels cannot carry a common type of cargo.

13. The computer-implemented method of any preceding claim, further comprising determining if the identified potential STS cargo transfer is complete; wherein determining if the identified potential STS cargo transfer is complete comprises determining if the distance between the first vessel and the second vessel is currently below the vessel distance threshold.

14. The computer-implemented method of any preceding claim, further comprising storing the location of the potential STS cargo transfer as an anchorage; the method further comprising:
identifying a plurality of potential STS cargo transfers,
storing the location of each potential STS cargo transfer as an anchorage; and
responsive to receiving a request from a user for anchorage information, providing anchorage information to the user, the anchorage information comprising a map or database of anchorages in a geographical region.

15. A computer readable medium comprising computer-executable instructions which, when executed by a processor, cause the processor to perform the method of any of the preceding claims.
